# EUROPÄISCHE PATENTANMELDUNG

(11) **EP 2 741 191 A2**
(43) Veröffentlichungstag der Anmeldung: **11.06.2014**
(21) Anmeldenummer: 13195538.7
(22) Anmeldetag: 03.12.2013
(51) Int. Cl.: G06F 3/0481, G06F 3/0488

(54) **Chipkartenleser mit einer platzsparenden und kombinierten benutzerbezogenen Datenein- und - ausgabe**

(30) Priorität: 04.12.2012 DE 202012104705 U
(71) Anmelder: Papagrigoriou, Paschalis, 90482 Nürnberg (DE)
(72) Erfinder: Papagrigoriou, Paschalis, 90482 Nürnberg (DE)
(74) Vertreter: 2K Patentanwälte Blasberg Kewitz & Reichel

(57) **Zusammenfassung**

Chipkartenleser für die Ansteuerung einer Chipkarte umfassend mindestens eine Anzeige und eine Tastatur gekennzeichnet durch die Realisierung sowohl der Anzeige als auch der Tastatur mit einem einigen berührungsempfindlichen Bildschirm.

## Beschreibung

Die Erfindung betrifft eine Vorrichtung zur signaturgestützten Absicherung elektronischer Transaktionen, die insbesondere von bankfachlichen Anwendungen auf persönlichen mobilen Endgeräten oder sonstigen Geld- oder Bezahlsystemen ausgeführt werden und die Integrität der digital signierten Informationen sowie die Identifikation des Urhebers dieser Informationen zweifelsfrei voraussetzen.

### Gebiet der Erfindung:

Elektronische Signaturen kommen immer dann zum Einsatz, wenn es darum geht, den Ersteller oder Sender eines elektronischen Dokuments oder Datensatzes ohne Zweifel zu identifizieren und die Integrität der signierten elektronischen Informationen zu gewährleisten. Ein Beispiel für einen sicherheitskritischen Bereich, der im alltäglichen Leben zunehmend an Bedeutung gewinnt, sind bankfachliche Anwendungen wie Home-Banking oder Mobile-Banking. Es ist unmittelbar einsichtig, was passieren könnte, wenn sich ein böswilliger Dritter als Inhaber eines Bankkontos ausgeben könnte, das ihm nicht gehört.

Mit dem Einsatz mobiler Systeme sowohl im privaten als auch im betrieblichen Bereich, wie auch im Bereich des Gesundheitswesens oder der öffentlichen Verwaltung vervielfältigen sich die Gefahren, die sich daraus ergeben, wenn die Integrität der übermittelten Informationen nicht garantiert werden kann, oder wenn die Identität des Erstellers nicht zweifelsfrei festgestellt werden kann. Abhängig vom geforderten Niveau der Sicherheit und vom präferierten Sicherheitsverfahren werden Chipkarten in Kombination mit einem Chipkartenleser eingesetzt.

### Stand der Technik

Die relevanten Verfahren, anhand derer der Stand der Technik im Folgenden beschrieben wird, kommen aus den Bereichen der Sicherheit im Zahlungsverkehr, der Online-Banking-Sicherheit und der Chiptechnologie. Allein die Anzahl der Sicherheitsverfahren im Internet, welche in den letzten zehn Jahren entwickelt wurden, zeigt, wie wichtig es ist, die Sicherheit und Zuverlässigkeit der Kommunikation im Internet zu gewährleisten. Verfahren, welche sich zur Sicherung einer Transaktion auf die Verwendung von TAN-Listen stützen, gelten mittlerweile nicht mehr als sicher und wurden von anderen Verfahren abgelöst.

Die Chipkarte steht nunmehr im Mittelpunkt aller ernst zu nehmenden Sicherheitsverfahren. Sie gilt technisch als sicherer Träger geheimer Schlüsselinformationen, sie ist immer beim Kunden (Besitzkomponente) und stellt zudem mittlerweile für jeden Nutzer ein wertvolles und sicheres Medium dar, auf welches er besonders achtet und dessen etwaigen Verlust er umgehend dem Herausgeber (z.B. seiner Bank) meldet. Somit kann beispielsweise ein Kreditinstitut immer darauf vertrauen, dass die Chipkarte bei seinem Kunden ist, und dass dieser tatsächlich die Person ist, die die Transaktionen ausführt, denn bei Verlust der Chipkarte würde dieser sofort gemeldet werden. Synonym zur Chipkarte wird auch der Begriff Smartcard verwendet. Letzterer wird in dieser Schrift ebenfalls benutzt, insbesondere wenn es um den Crypto-Micro-Controller einer Chipkarte geht, den eigentlichen Baustein für kryptographische Operationen.

Die meisten auf einer Chipkarte basierten Sicherheitsverfahren benötigen einen Chipkartenleser. Bedingt durch die aktuellen Standards und in Fällen, wo ein hohes Sicherheitsniveau erreicht werden soll, besitzen die entsprechenden Kartenleser heute ein Display und eine separate Tastatureinheit.

Chipkartenleser sind Geräte, die Chipkarten ansteuern. Dabei werden nicht nur Daten gelesen, sondern auch geschrieben, oder Applikationen auf der Chipkarte angesteuert; daher spricht man auch von einem Chipkartenterminal [1]. Es gibt vier Sicherheitsklassen für Chipkartenleser, die bei der DK (Deutsche Kreditwirtschaft) spezifiziert wurden. Die Sicherheitsklassen 1 und 2 sind für ein ernsthaftes Sicherheitsniveau uninteressant. Chipkartenleser der Sicherheitsklasse 3 besitzen ein Display und eine Tastatur sowie Zusatzfunktionen, mit denen das Bezahlen mit der Geldkarte im Internet möglich ist. Chipkartenleser der Sicherheitsklasse 4 verfügen zusätzlich zu den Merkmalen der Klasse 3 auch über eine eigene manipulationssichere Identität. Dies wird mit einer zusätzlichen Chipkarte möglich. Wird ein Chipkartenleser mit einem PC über USB oder einer seriellen Schnittstelle verbunden, so wird dieser über proprietäre oder standardisierte Software-Schnittstellen erkannt, und kann mit einer Anwendung kommunizieren. Als Standard für solche Schnittstellen gilt heute PC/SC [3], wofür es sowohl Windows- als auch Linux-Implementierungen gibt. Die Secoder-Spezifikation [2] geht über die Merkmale der Sicherheitsklasse 3 hinaus. Ein nach dieser Spezifikation gebauter Chipkartenleser enthält eine Firewall, welche vor möglichen Manipulationen schützt, während das Gerät mit dem Nutzer über Display und Tastatur interagiert (z.B. PIN-Eingabe) oder Daten für den Signaturvorgang mit einer Chipkarte verarbeitet. Zusätzlich fordern Standards, wie der Secoder-Standard, dass immer mehr Informationen auf dem Bildschirm des Chipkartenlesers für den Benutzer sichtbar werden, bevor dieser über die Tastatur die Transaktion freigibt.

Die Anpassung der Chipkartenleser konnte trotz rasanter und beispielhafter Entwicklung im Bereich der mobilen Endgeräte (Smartphones, Tablets, etc.) nicht in angemessener Weise Schritt halten. So haben die heutigen Geräte, die auch in Kombination mit mobilen Endgeräten verwendet werden, in der Praxis für den Benutzer mehr oder weniger gravierende Nachteile hinsichtlich der Handhabbarkeit oder Bedienbarkeit, was sie für einen weitgestreuten Einsatz unakzeptabel macht. Der Chipkartenleser ist für den Nutzer zwangsläufig ein weiteres Gerät, das dieser immer dabei haben muss, wenn es um sicherheitskritische Kommunikation geht (z.B. mobile Banking). Damit die heutigen Chipkartenleser alle Anforderungen der Sicherheitsstandards und der mobilen Kommunikation erfüllen können, werden sie entweder groß gebaut, oder sie sind kompakt und platzsparend, wobei sie aber nur winzige Tasten und Anzeigen enthalten.

### Beschreibung der Erfindung und der Ausführungsformen

Im Gegensatz zum Stand der Technik erfüllt die erfindungsgemäße Lösung nicht nur die höchsten Sicherheitsanforderungen, sondern sie kann zudem auch noch die Informationsausgabe und Informationseingabe während einer Transaktion durch dynamische Anordnung der Fläche des berührungsempfindlichen Bildschirms optimal und benutzerfreundlich gestalten.
Im Einzelnen betrifft die Erfindung einen Chipkartenleser für die Ansteuerung von Chipkarten mindestens bestehend aus einer Anzeige und einer Tastatur, wobei sowohl die Anzeigefunktionalität als auch die Tastaturfunktionalität durch einen einzigen berührungsempfindlichen Bildschirm erbracht werden.
In einer weiteren Ausführungsform ist die über einen berührungsempfindlichen Bildschirm realisierte Kombination der Anzeige und der Tastatur so ausgebildet, dass sowohl die gemäß eines Chipkartenleser-Standards und während einer Transaktion über eine Anzeige erforderliche Informationsausgabe, als auch die gemäß eines Chipkartenleser-Standards und während einer Transaktion über eine Tastatur erforderliche Informationseingabe gleichermaßen möglich sind, indem bei konstanten Dimensionen des verwendeten berührungsempfindlichen Bildschirms das Verhältnis zwischen der Flächenbelegung für die Informationsausgabe und der Flächenbelegung für die Informationseingabe dynamisch verändert wird, abhängig davon, ob entweder die Anzeige- oder die Tastaturfunktion für die aktuell anstehende Transaktion oder den aktuell anstehenden Dialogschritt im Vordergrund steht. Wird für eine Informationsausgabe auf dem berührungsempfindlichen Bildschirm eine größere Fläche benötigt, so verringert sich dementsprechend die Anzahl der auf dem berührungsempfindlichen Bildschirm angezeigten Tasten, und wenn umgekehrt für die aktuell anstehende Transaktion oder den aktuell anstehenden Dialogschritt eine größere Anzahl von Tasten zur Informationseingabe erforderlich ist, so verringert sich dementsprechend die Fläche des berührungsempfindlichen Bildschirms für die Informationsausgabe.

In einer weiteren Ausführungsform kann die dynamische Aufteilung des berührungsempfindlichen Bildschirms in Bereiche für Informationsausgabe und Informationseingabe im Verlauf einer Transaktion auch mehrmals erfolgen.
In einer weiteren Ausführungsform enthält die erfindungsgemäße Vorrichtung eine oder mehrere Anzeigeeinheiten, wobei mindestens eine über den berührungsempfindlichen Bildschirm realisiert ist.
In einer weiteren Ausführungsform enthält die erfindungsgemäße Vorrichtung eine oder mehrere Tastatureinheiten, wobei mindestens eine über den berührungsempfindlichen Bildschirm realisiert ist.
In einer weiteren Ausführungsform enthält die erfindungsgemäße Vorrichtung eine oder mehrere berührungsempfindliche Bildschirme.
Die Vorteile der erfindungsgemäßen Vorrichtung liegen in der optimalen Gestaltung des berührungsempfindlichen Bildschirms, so dass auf wenig Fläche alle erforderlichen Funktionen realisierbar sind. Wenn ein Chipkartenleser konform zu einem der üblichen Sicherheitsstandards (z.B.Secoder-2 in Deutschland [2]) realisiert ist und während seiner Benutzung in einer Transaktion eine Eingabe durch den Nutzer über eine große Anzahl von Tasten verlangt wird, wie beispielsweise die numerischen Tasten mit einigen Funktionstasten für die Eingabe der PIN, dann wird auf dem berührungsempfindlichen Bildschirm für die Informationsausgabe lediglich eine Fläche zur Verfügung gestellt, die eine oder max. zwei Display-Zeilen mit (beispielsweise) jeweils 16 Zeichen anzeigen kann. Wenn ein Chipkartenleser konform zu einem der üblichen Sicherheitsstandards (z.B.Secoder-2 in Deutschland) realisiert ist und während seiner Benutzung in einer Transaktion eine umfangreiche Display-Anzeige für den Nutzer erforderlich ist, wie beispielsweise das vier-Zeilen-Display beim Secoder-Standard, dann wird auf dem berührungsempfindlichen Bildschirm nicht die volle Anzahl der Tasten eingeblendet, sondern eine mehr oder weniger stark reduzierte Anzahl von Tasten; z.B. gemäß Secoder-Standard eine "OK"-Taste und eine "Abbruch"-Taste.

### Beschreibung der Figuren

Es werden folgende Figuren präsentiert:
Figur 1. mit der klassischen Darstellung eines Chipkartenlesers wonach Anzeige und Tastatur zwei separate Einheiten sind.
Figur 2. mit der technischen Anordnung der erfindungsgemäßen Vorrichtung wonach beispielhaft ein berührungsempfindlicher Bildschirm enthalten ist.
Figur 2a. mit der technischen Anordnung der erfindungsgemäßen Vorrichtung wonach beispielhaft ein berührungsempfindlicher Bildschirm enthalten ist, das eine Anzeige und eine Tastaturfläche abbildet.
Figur 2b. und 2c. mit der technischen Anordnung der erfindungsgemäßen Vorrichtung wonach beispielhaft ein berührungsempfindlicher Bildschirm enthalten ist, das weitere Muster von Anzeige- und Tastaturflächen abbildet.

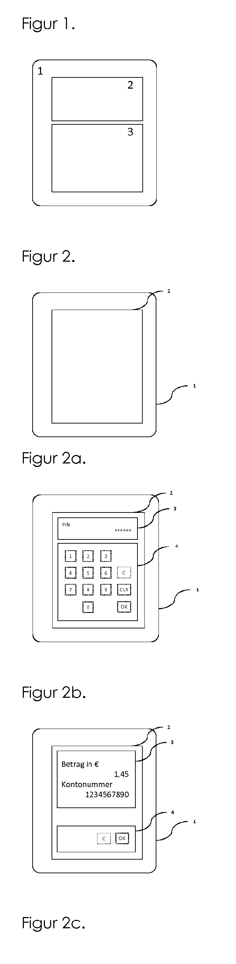

Figure 1. zeigt die klassische Ansicht eines Chipkartenlesers [Fig. 1, Ziffer 1] mit Anzeige [Fig. 1, Ziffer 2] und Tastatur [Fig. 1, Ziffer 3] als separate Hardwareeinheiten.

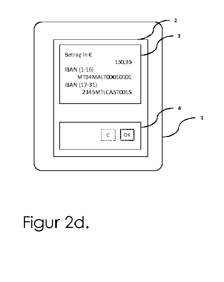

Die Figur 2 zeigt eine Ausführungsform der erfindungsgemäßen Vorrichtung **1** mit einem berührungsempfindlichen Bildschirm **2.**
Die Figur 2a zeigt eine Ausführungsform der erfindungsgemäßen Vorrichtung **1** mit einem berührungsempfindlichen Bildschirm **2,** der für die Informationsausgabe ein beispielhaftes Zweizeilendisplay **3** abbildet sowie für die Informationseingabe eine ausführiche Tastatur mit 13 Tasten **4** abbildet.
Die Figur 2b zeigt eine Ausführungsform der erfindungsgemäßen Vorrichtung **1** mit einem berührungsempfindlichen Bildschirm **2,** der für die Informationsausgabe ein beispielhaftes Vierzeilendisplay **3** abbildet sowie für die Informationseingabe eine Tastatur mit 2 Tasten **4** abbildet.
Die Figur 2c zeigt eine Ausführungsform der erfindungsgemäßen Vorrichtung **1** mit einem berührungsempfindlichen Bildschirm **2,** der für die Informationsausgabe ein beispielhaftes Sechszeilendisplay **3** abbildet sowie für die Informationseingabe eine Tastatur mit 2 Tasten **4** abbildet.

### Literaturverweise

[1] Wikipedia, Chipkartenleser, Kartenlese Chip-Kartenlesergerät, http://de.wikipedia.org/wiki/Kartenleseger%C3%A4t
[2] Deutsche Kreditwirtschaft (DK) Secoder, Connected mode, Reader Applications", Version 2.2
[3] Wikipedia, PC/SC Workgroup, www.pcscworkgroup.com/

## Patentansprüche

1. Chipkartenleser für die Ansteuerung von Chipkarten bestehend mindestens aus einer Anzeige und einer Tastatur, **gekennzeichnet durch** die Realisierung sowohl der Anzeige als auch der Tastatur mit einem einzigen berührungsempfindlichen Bildschirm.
**gekennzeichnet durch** eine kombinierte Anzeige und Tastatur in Form eines berührungsempfindlichen Bildschirms, der so ausgebildet ist, dass sowohl die gemäß eines Chipkartenleser-Standards und während einer Transaktion über eine Anzeige erforderliche Informationsausgabe, als auch die gemäß eines Chipkartenleser-Standards und während einer Transaktion über eine Tastatur erforderliche Informationseingabe gleichermaßen möglich sind, indem bei konstanten Dimensionen des verwendeten berührungsempfindlichen Bildschirms das Verhältnis zwischen der Flächenbelegung für die Informationsausgabe und der Flächenbelegung für die Informationseingabe dynamisch veränderbar ist, abhängig davon, ob entweder die Anzeige- oder die Tastaturfunktion für die aktuell anstehende Transaktion oder den aktuell anstehenden Dialogschritt im Vordergrund steht,
wobei sollte für eine Informationsausgabe auf dem berührungsempfindlichen Bildschirm eine größere Fläche benötigt werden, so verringert sich dementsprechend die Anzahl der auf dem berührungsempfindlichen Bildschirm angezeigten Tasten, und wenn umgekehrt für die aktuell anstehende Transaktion oder den aktuell anstehenden Dialogschritt eine größere Anzahl von Tasten zur Informationseingabe erforderlich ist, so verringert sich dementsprechend die Fläche des berührungsempfindlichen Bildschirms für die Informationsausgabe.

2. Chipkartenleser nach einem oder mehreren der vorhergehenden Ansprüche, **gekennzeichnet durch** einen berührungsempfindlichen Bildschirm, wobei die dynamische Aufteilung in Bereiche für Informationsausgabe und Informationseingabe im Verlauf einer Transaktion auch mehrmals erfolgt.

3. Chipkartenleser nach einem oder mehreren der vorhergehenden Ansprüche, wobei eine oder mehrere Anzeigeeinheiten enthalten sind und mindestens eine über den berührungsempfindlichen Bildschirm realisiert ist.

4. Chipkartenleser nach einem oder mehreren der vorhergehenden Ansprüche, wobei eine oder mehrere Tastatureinheiten enthalten sind und mindestens eine über den berührungsempfindlichen Bildschirm realisiert ist.

5. Chipkartenleser nach einem oder mehreren der vorhergehenden Ansprüche, wobei ein oder mehrere berührungsempfindliche Bildschirme enthalten sind.
